# EUROPEAN PATENT APPLICATION

(11) **EP 3 223 258 A2**
(43) Date of publication of application: **27.09.2017**
(21) Application number: 17157508.7
(22) Date of filing: 23.02.2017
(51) Int. Cl.: G08G 1/0967, G08G 1/16

(54) **TERMINAL DEVICE AND METHOD FOR TERMINAL DEVICE**

(30) Priority: 25.03.2016 JP 2016062319
(71) Applicant: Panasonic Intellectual Property Management Co., Ltd., Osaka-shi, Osaka 540-6207 (JP)
(72) Inventor: KOUYAMA, Tadahisa, Osaka-shi, Osaka 540-6207 (JP); HATAYAMA, Yoshinori, Osaka-shi, Osaka 540-6207 (JP)
(74) Representative: Grünecker Patent- und Rechtsanwälte PartG mbB

(57) **Abstract**

Either first or second position information additionally includes vehicle length. A derivation unit on a vehicle derives a first time taken for the vehicle to reach a point of encounter based on the first position information and a second time taken for another vehicle to reach the point of encounter based on the second position information. The derivation unit also derives a third time taken for the position of third position information, determined by shifting one of the first and second position information in accordance with vehicle length, to reach the point of encounter. A notification unit issues an alert if the relationship between the first and second times satisfies assistance triggering conditions. Even when they are not satisfied, it issues an alert if the relationship between a time derived based on the other one of the first and second position information and the third time satisfies assistance triggering conditions.

## Description

### BACKGROUND

### 1. Technical Field

The present disclosure relates to communication technology, and more particularly to a terminal device that transmits and receives signals including predetermined information.

### 2. Description of the Related Art

A vehicle can occasionally be connected with another vehicle. In such a situation, the vehicle can obtain vehicle information from the connected other vehicle and use the vehicle information to calculate fuel consumption (see Japanese Unexamined Patent Application Publication No. 2013-257623, for instance).

### SUMMARY

In inter-vehicle communication, vehicles transmit packet signals including vehicle position information so that other vehicles can use the position information included in a received packet signal for driving assistance such as assistance for right-turn collision avoidance. While information such as vehicle length or weight could be included in a packet signal, these kinds of information have not been utilized for driving assistance. Connecting a vehicle to another vehicle to be towed by the vehicle results in a substantial increase in the vehicle's length, which affects driving assistance.

One non-limiting and exemplary embodiment provides a technique for executing driving assistance taking the vehicle length into consideration.

In one general aspect, the techniques disclosed here feature a terminal device mounted on a first vehicle, the terminal device including: one or more memories; and circuitry which, in operation, performs operations including: obtaining first position information indicating a position of the first vehicle; receiving second position information indicating a position of a second vehicle which is different from the first vehicle; deriving a first time period required for the first vehicle to reach a point of encounter at least from the first position information, the point of encounter being a point at which the first vehicle and the second vehicle are expected to encounter each other; deriving a second time period required for the second vehicle to reach the point of encounter at least from the second position information; issuing an alert if a relationship between the first time period and the second time period satisfies assistance triggering conditions; when the first position information additionally includes information on a vehicle length of the first vehicle, calculating a third time period required for a rear position on the first vehicle to reach the point of encounter, the rear position on the first vehicle being a position shifted backward from a position indicated by the first position information in accordance with the vehicle length of the first vehicle; when the second position information additionally includes information on a vehicle length of the second vehicle, calculating a fourth time period required for a rear position on the second vehicle to reach the point of encounter, the rear position on the second vehicle being a position shifted backward from a position indicated by the second position information in accordance with the vehicle length of the second vehicle; and when the relationship between the first time period and the second time period does not satisfy the assistance triggering conditions, issuing an alert if a relationship between the second time period and the third time period satisfies the assistance triggering conditions or if a relationship between the first time period and the fourth time period satisfies the assistance triggering conditions.

It should be noted that any combination of the above components or conversions of the representation of the present disclosure among method, device, system, recording medium, computer program, or the like are also valid as aspects of the present disclosure.

The present disclosure enables execution of driving assistance that takes the vehicle length into consideration.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 shows a configuration of a communication system according to Embodiment 1 of the present disclosure;
Fig. 2 shows the format of a frame specified in the communication system of Fig. 1;
Fig. 3 shows a configuration of the terminal device of Fig. 1;
Fig. 4A schematically illustrates processing performed by the communication system of Fig. 1;
Fig. 4B schematically illustrates processing performed by the communication system of Fig. 1;
Fig. 5A illustrates a vehicle from Fig. 1 and a vehicle towed by it;
Fig. 5B illustrates a vehicle from Fig. 1 and a vehicle towed by it;
Fig. 6A schematically illustrates processing performed by the communication system according to Embodiment 2 of the present disclosure;
Fig. 6B schematically illustrates processing performed by the communication system according to Embodiment 2 of the present disclosure; and
Fig. 7 is a flowchart illustrating the procedure of notification by the terminal device according to Embodiment 2 of the present disclosure.

### DETAILED DESCRIPTION

### (Embodiment 1)

Before specifically describing the present disclosure, an overview is provided. Embodiment 1 of the present disclosure relates to a communication system that performs inter-vehicle communication between terminal devices mounted on vehicles as well as road-to-vehicle communication from a base station device located at, for example, an intersection to vehicles. Such communication systems are also known as intelligent transport systems (ITS). The communication system uses an access control function called carrier sense multiple access with collision avoidance (CSMA/CA), as with a wireless local area network (LAN) compliant with a standard such as IEEE 802.11. Accordingly, the same wireless channel is shared by multiple terminal devices. In ITS, it is necessary to transmit information to an unspecified large number of terminal devices. In order to efficiently carry out such transmission, the present communication system broadcasts packet signals.

More specifically, a terminal device broadcasts a packet signal containing information such as the position, speed, direction of travel, and the like of the vehicle through inter-vehicle communication. Another terminal device receives the packet signal and recognizes the approach of the vehicle or the like based on the information. In order to reduce interference between road-to-vehicle communication and inter-vehicle communication, a base station device repeatedly specifies a frame including multiple subframes. The base station device selects one of the subframes for road-to-vehicle communication and broadcasts a packet signal containing control information and the like during a period in the beginning part of the selected subframe.

The control information includes information on a period in which the base station device broadcasts packet signals (hereinafter referred to as "road-to-vehicle transmission period"). The terminal device determines the road-to-vehicle transmission period based on the control information and broadcasts a packet signal by CSMA during a period other than the road-to-vehicle transmission period (hereinafter referred to as "inter-vehicle transmission period"). Consequently, road-to-vehicle communication and inter-vehicle communication are time-multiplexed. A terminal device that fails to receive the control information from the base station device, that is, a terminal device located outside an area formed by the base station device broadcasts a packet signal by CSMA regardless of frame configuration.

Under these circumstances, the terminal device according to this embodiment of the present disclosure decides to execute driving assistance when assistance triggering conditions are satisfied based on information included in a packet signal received from another terminal device or a base station device. An example of the information included in the packet signal is position information for the vehicle on which the other terminal device is mounted. Driving assistance refers to aiding the driver in driving a car, an example of which is assistance for right-turn collision avoidance. In the assistance for right-turn collision avoidance, the driver is notified of the presence of another car that is traveling in the oncoming lane at the time of turning right. Although multiple types of driving assistance have been specified, assistance for right-turn collision avoidance will be considered herein for the sake of clarity.

In the assistance for right-turn collision avoidance, a calculation is made to determine if the timing between a vehicle that is going to make a right turn and another vehicle traveling straight in the direction of passing the vehicle is such that they will encounter each other at a point where the two can meet (hereinafter referred to as "point of encounter"). This calculation should take the vehicle lengths into account because the two vehicles will have passed the point of encounter at different times depending on their vehicle length. Specifically, a longer vehicle length takes a longer time to pass the point of encounter, thus having larger impact. A long vehicle length may refer to a case where a vehicle is connected to a vehicle being towed by it, for example.

Embodiment 1 assumes that another vehicle that is traveling in the oncoming direction has a longer vehicle length than a subject vehicle. The terminal device mounted on the subject vehicle obtains position information of the vehicle (hereinafter referred to as "first position information") using the global positioning system (GPS) and the like. As a GPS antenna is typically attached on the dashboard of the vehicle, the first position information can be considered to represent position information for the front part of the vehicle. The terminal device also obtains position information of the other vehicle (hereinafter referred to as "second position information") through inter-vehicle communication. The terminal device further obtains position information for the rear part of the vehicle (hereinafter referred to as "third position information") by adding the vehicle length to the first position information. Under these conditions, the terminal device determines the risk of encounter based on the first and the second position information as well as on the second and the third position information. The first and the second position information may include information on the travel speed, direction of travel, and the like of the vehicle.

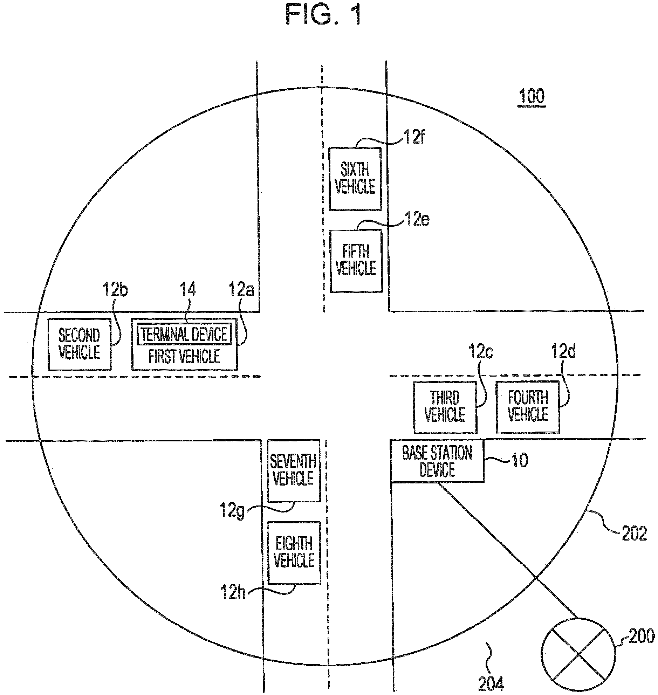

Fig. 1 shows a configuration of a communication system 100 according to an embodiment of the present disclosure. This diagram represents one intersection as seen from above. The communication system 100 includes a base station device 10, a first vehicle 12a, a second vehicle 12b, a third vehicle 12c, a fourth vehicle 12d, a fifth vehicle 12e, a sixth vehicle 12f, a seventh vehicle 12g, and an eighth vehicle 12h, which are collectively referred to as vehicle 12, and a network 200. A terminal device 14 is mounted on each vehicle 12, although illustrated only in the first vehicle 12a in Fig. 1. An area 202 is defined around the base station device 10, and outside 204 of the area is defined outside the area 202.

As shown in Fig. 1, a road extending in the horizontal direction in the drawing, that is, the left-right direction, and a road extending in the vertical direction in the drawing, that is, the up-down direction, cross in the center. In Fig. 1, the upper, left, lower, and right sides correspond to the directions of north, west, south, and east, respectively. The point at which the two roads cross is the intersection. The first vehicle 12a and the second vehicle 12b are traveling from the left to right side, and the third vehicle 12c and the fourth vehicle 12d are traveling from the right to left side. The fifth vehicle 12e and the sixth vehicle 12f are traveling from the upper side to the lower side, and the seventh vehicle 12g and the eighth vehicle 12h are traveling from the lower side to the upper side. An example of the vehicle 12 is an automobile.

In the communication system 100, the base station device 10 is fixedly installed at the intersection. The base station device 10 controls communication among terminal devices. The base station device 10 repeatedly generates a frame including multiple subframes based on signals received from a GPS satellite not illustrated or frames generated by other base station device 10 not illustrated. For example, ten frames of 100 msec are generated by dividing a period of one sec indicated in a signal received from a GPS satellite into ten. Specifications have been made to make it possible to set the road-to-vehicle transmission period in the beginning part of each subframe.

From the multiple subframes in a frame, the base station device 10 selects a subframe in which the road-to-vehicle transmission period has not been set by other base station device 10. The base station device 10 sets the road-to-vehicle transmission period in the beginning part of the selected subframe. The base station device 10 broadcasts a packet signal in the road-to-vehicle transmission period that has been set. More than one packet signals could be broadcast in the road-to-vehicle transmission period. A packet signal is formed from control information and payload. The control information includes the subframe number of the subframe in which the road-to-vehicle transmission period is set and the like. The payload includes accident information, congestion information, and signal information, for example. These data are obtained from the network 200.

The terminal device 14 is mounted on the vehicle 12 as mentioned above and thus mobile. Upon receiving a packet signal from the base station device 10, the terminal device 14 estimates that the terminal device 14 is in the area 202. When the terminal device 14 is in the area 202, it generates a frame based on the control information included in the packet signal, particularly information about the timing in which the road-to-vehicle transmission period is set and information about the frame. As a consequence, the frame generated by each of the multiple terminal devices 14 synchronizes with the frame generated by the base station device 10. The terminal device 14 broadcasts the packet signal during the inter-vehicle transmission period, which is a separate period from the road-to-vehicle transmission period. In the inter-vehicle transmission period, CSMA/CA is carried out. When the terminal device 14 estimates that the terminal device 14 is in the outside 204 of the area, it broadcasts the packet signal by carrying out CSMA/CA regardless of the frame configuration. The terminal device 14 recognizes, for example, approach of another vehicle 12 on which another terminal device 14 is mounted based on the packet signal from the other terminal device 14.

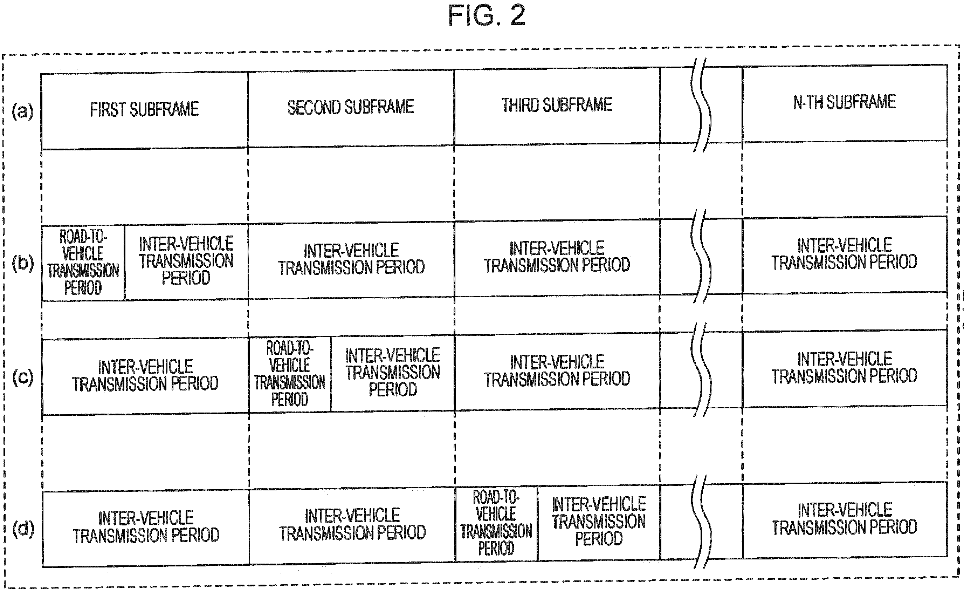

Fig. 2 shows a format of the frame specified in the communication system 100. Fig. 2(a) shows the frame configuration. The frame is formed of N subframes shown as the first to N-th subframes. In other words, the frame is formed by time-multiplexing of multiple subframes that can be used for broadcast transmission by the terminal device 14. When the frame length is 100 msec and N is 8, for example, a subframe with a length of 12.5 msec is specified. N may be a value other than 8.

Fig. 2(b) shows the configuration of a frame generated by a first base station device 10a not illustrated. The first base station device 10a is any one of the base station devices 10. The first base station device 10a sets the road-to-vehicle transmission period in the beginning part of the first subframe. The road-to-vehicle transmission period is a period during which the base station device 10 is able to broadcast a packet signal. The first base station device 10a also sets the inter-vehicle transmission period subsequent to the road-to-vehicle transmission period in the first subframe. The inter-vehicle transmission period is a period during which the terminal device 14 is able to broadcast a packet signal. That is, specifications are made so that the first base station device 10a can broadcast a packet signal in the road-to-vehicle transmission period, which is the beginning period of the first subframe, and the terminal device 14 can broadcast a packet signal in the inter-vehicle transmission periods excluding the road-to-vehicle transmission period within the frame. The first base station device 10a further sets only the inter-vehicle transmission period in the second through N-th subframes.

Fig. 2(c) shows the configuration of a frame generated by a second base station device 10b not illustrated. The second base station device 10b sets the road-to-vehicle transmission period in the beginning part of the second subframe. The second base station device 10b also sets the inter-vehicle transmission period in the second subframe subsequent to the road-to-vehicle transmission period, in the first subframe, and in the third to N-th subframes. Fig. 2(d) shows the configuration of a frame generated by a third base station device 10c not illustrated. The third base station device 10c sets the road-to-vehicle transmission period in the beginning part of the third subframe. The third base station device 10c also sets the inter-vehicle transmission period in the third subframe subsequent to the road-to-vehicle transmission period, in the first and second subframes, and in the fourth to N-th subframes. In this manner, the multiple base station devices 10 select different subframes from each other and set the road-to-vehicle transmission period in the beginning part of the selected subframe.

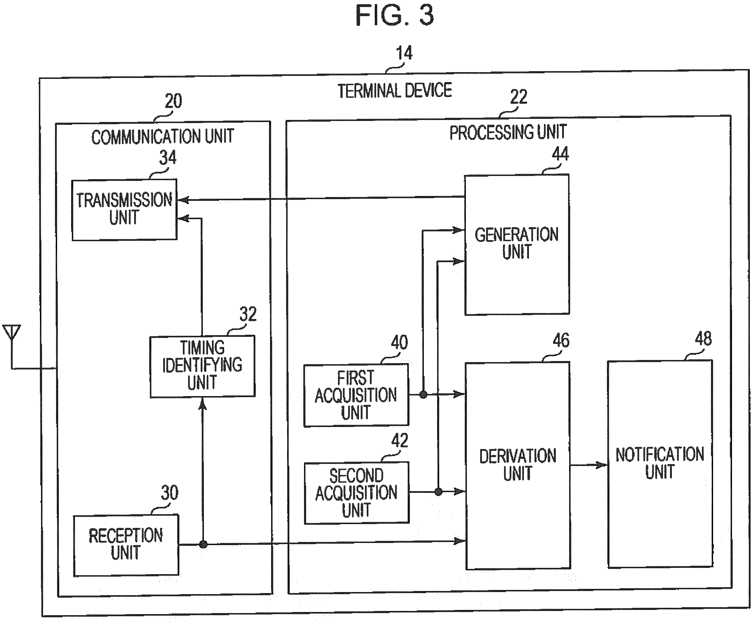

Fig. 3 shows a configuration of the terminal device 14. The terminal device 14 includes a communication unit 20 and a processing unit 22. The communication unit 20 includes a reception unit 30, a timing identifying unit 32, and a transmission unit 34. The processing unit 22 includes a first acquisition unit 40, a second acquisition unit 42, a generation unit 44, a derivation unit 46, and a notification unit 48. The terminal device 14 is mountable on the vehicle 12 as mentioned above.

The reception unit 30 receives packet signals from other terminal devices 14 not illustrated or from the base station device 10 via an antenna. The reception unit 30 performs frequency conversion on a received packet signal of a radio frequency to generate a baseband packet signal. The reception unit 30 also performs demodulation on the baseband packet signal. As the communication system 100 supports the orthogonal frequency division multiplexing (OFDM) modulation scheme, the reception unit 30 also carries out fast Fourier transform (FFT). The reception unit 30 outputs the result of demodulation to the processing unit 22 and the timing identifying unit 32.

The timing identifying unit 32 identifies the timing in the subframes at which the road-to-vehicle transmission period is located when the result of demodulation from the reception unit 30 indicates a packet signal from a base station device 10 not illustrated. In identifying the timing, the timing identifying unit 32 estimates that the terminal device 14 is in the area 202 of Fig. 1. The timing identifying unit 32 generates a frame synchronized with the frame that was generated at the base station device 10 based on information included in the packet signal from the base station device 10. When a packet signal from the base station device 10 has not been input, the timing identifying unit 32 estimates that the terminal device 14 is in the outside 204 of the area in Fig. 1.

When the timing identifying unit 32 estimates that the terminal device 14 is in the area 202, the timing identifying unit 32 selects the inter-vehicle transmission period. The timing identifying unit 32 also determines the transmission timing by starting CSMA/CA during the inter-vehicle transmission period. The timing identifying unit 32 determines the transmission timing by carrying out CSMA/CA without consideration of the frame configuration. The timing identifying unit 32 notifies the transmission unit 34 of the transmission timing determined.

The transmission unit 34 performs modulation on data from the processing unit 22. As the communication system 100 supports the OFDM modulation scheme as mentioned above, the transmission unit 34 performs inverse fast Fourier transform (IFFT) as well. The transmission unit 34 also performs frequency conversion on the resulting baseband packet signal to generate a packet signal of a radio frequency. The transmission unit 34 then broadcasts the packet signal of the radio frequency from an antenna at the transmission timing notified by the timing identifying unit 32.

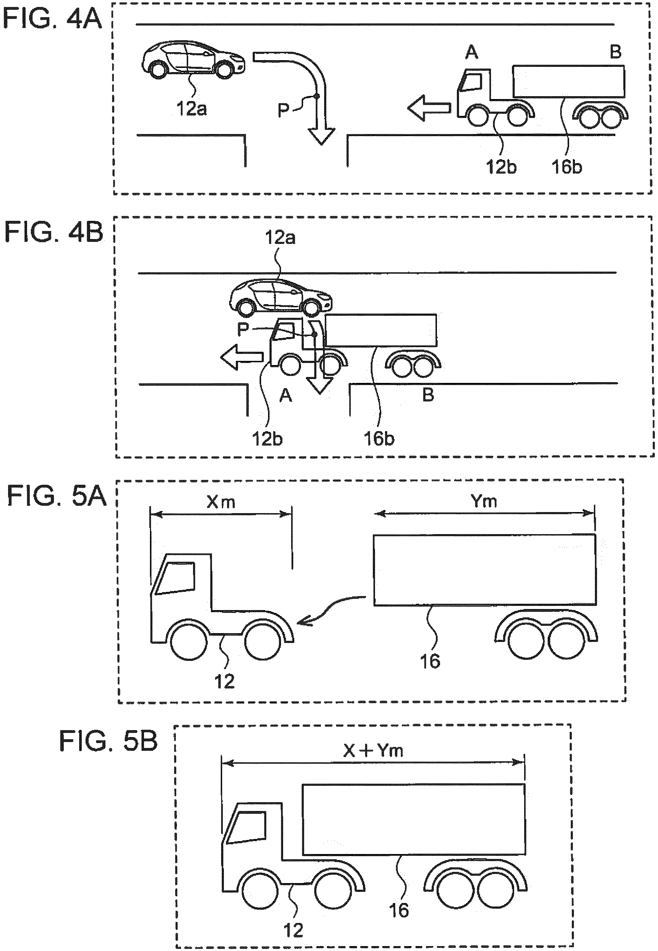

Before describing the configuration of the processing unit 22 next, the scenario assumed in this embodiment will be described. Figs. 4A and 4B schematically illustrate processing performed by the communication system 100. Fig. 4A shows a situation where the assistance for right-turn collision avoidance mentioned above is carried out. The first vehicle 12a and the second vehicle 12b are to pass each other in terms of their positional relationship, but the first vehicle 12a is going to turn right at the intersection while the second vehicle 12b is going to travel straight across the intersection. Thus, the first vehicle 12a and the second vehicle 12b can encounter, can collide with each other, for example, at a point of encounter P. Also, the second vehicle 12b is towing a second towed vehicle 16b; thus the total vehicle length of the second vehicle 12b and the second towed vehicle 16b is longer than the vehicle length of the first vehicle 12a. A first terminal device 14a (not shown) is mounted on the first vehicle 12a and a second terminal device 14b (not shown) is mounted on the second vehicle 12b. As the first terminal device 14a is executing assistance for right-turn collision avoidance, the following will mainly describe the configuration of the processing unit 22 of the first terminal device 14a.

The first acquisition unit 40 obtains the position, direction of travel, travel speed, or the like of the vehicle 12 on which this terminal device 14 is mounted (collectively referred to as "first position information" as mentioned above) from data supplied by a GPS receiver, a gyroscope, a speed sensor, and the like, not illustrated, included in the first acquisition unit 40. The position is indicated by a latitude and a longitude. The direction of travel is indicated by an azimuth that is measured with the north as reference azimuth (zero degrees) and with clockwise angle represented as positive. Such measurements may be obtained using publicly known techniques and thus description on them is omitted herein. The first acquisition unit 40 is connected with a direction indicator of the vehicle 12 and obtains information on the direction indicated by the direction indicator as well (hereinafter referred to as "indicator information"). The first acquisition unit 40 outputs the first position information and indicator information to the generation unit 44 and the derivation unit 46.

The reception unit 30 outputs results of demodulation as mentioned above. Results of demodulation include the position, direction of travel, travel speed, and the like of another vehicle 12 transmitted from another terminal device 14 mounted on the other vehicle 12 (collectively referred to as "the second position information" as mentioned above). The second position information is input to the derivation unit 46. The results of demodulation also include information on the vehicle length of the other vehicle 12. In the example of Fig. 4A, the vehicle length of the other vehicle 12 represents the sum of the vehicle length of the other vehicle 12 itself and the vehicle length of the towed vehicle 16. Such information on the vehicle length of the other vehicle 12 can be considered to be information added to the second position information. The vehicle length information will be discussed later. The second position information and the vehicle length information are input to the derivation unit 46.

The second acquisition unit 42 obtains information on the vehicle length of the vehicle 12 on which the terminal device 14 is mounted. When the vehicle 12 is towing the towed vehicle 16, the second acquisition unit 42 obtains information on the vehicle length of the towed vehicle 16 as well. While the vehicle 12 on which the terminal device 14 is mounted has no towed vehicle 16 connected to it, the vehicle length information received by the reception unit 30 includes the towed vehicle 16. Accordingly, the vehicle length information will be now described using Figs. 5A and 5B. Figs. 5A and 5B illustrate the vehicle 12 and the towed vehicle 16. Fig. 5A illustrates the vehicle 12 and the towed vehicle 16 before they are connected. The towed vehicle 16 is assumed to be a carrier in this example. The vehicle 12 has a vehicle length of Xm and the towed vehicle 16 has a vehicle length of Ym.

Fig. 5B illustrates the vehicle 12 and the towed vehicle 16 after they are connected. The vehicle 12 and the towed vehicle 16 are connected by coupling of connectors not illustrated, upon which a communication connection is also established between the vehicle 12 and the towed vehicle 16. The communication connection may be either wired or wireless. Upon recognizing the establishment of the communication connection, the second acquisition unit 42 of the terminal device 14 mounted on the vehicle 12 requests a communication device mounted on the towed vehicle 16 to send information on the vehicle length of the towed vehicle 16. In response to the request, the communication device transmits information on the vehicle length of the towed vehicle 16, so that the second acquisition unit 42 obtains the information on the vehicle length of the towed vehicle 16.

Referring back to Fig. 3, when the second acquisition unit 42 of the other terminal device 14 mounted on the other vehicle 12 obtains the information on the vehicle length of the towed vehicle 16, the second acquisition unit 42 adds the vehicle length of the towed vehicle 16 to the vehicle length of the vehicle 12, the result of which is handled as the vehicle length of the vehicle 12. That is, the second acquisition unit 42 corrects the vehicle length of the vehicle 12 with the vehicle length of the towed vehicle 16. This corresponds to X+Ym in the example of Fig. 5B. Strictly, the length of an overlap between the vehicle 12 and the towed vehicle 16 is preferably subtracted from the vehicle length. When the vehicle 12 is not towing the towed vehicle 16, that is, the second acquisition unit 42 of the subject terminal device 14 makes no correction to the vehicle length of the vehicle 12 obtained. The second acquisition unit 42 outputs the vehicle length information for the vehicle 12 to the generation unit 44 and the derivation unit 46 as with the first acquisition unit 40.

The derivation unit 46 receives the first position information and indicator information input from the first acquisition unit 40, and the second position information and vehicle length information input from the reception unit 30. If the indicator information from the first acquisition unit 40 indicates a right turn, the derivation unit 46 determines the point of the right turn (or the "point of encounter" as mentioned above) by referencing the first position information and map data. The derivation unit 46 also derives the time taken for the subject vehicle 12 to reach the point of encounter (hereinafter referred to as "the first time") by dividing the distance between the position indicated by the first position information and the point of encounter by the travel speed included in the first position information. The derivation unit 46 then derives the time taken for the other vehicle 12 to reach the point of encounter (hereinafter referred to as "the second time") by dividing the distance between the position indicated by the second position information and the point of encounter by the travel speed included in the second position information.

The derivation unit 46 further derives third position information by shifting the position indicated by the second position information in accordance with the vehicle length. More specifically, the derivation unit 46 shifts the position indicated by the second position information by the vehicle length in the opposite direction to the point of encounter, thus deriving the third position information. The third position information indicates the position of a rear part of the towed vehicle 16 being towed by the other vehicle 12. The derivation unit 46 derives the time taken for the position indicated by the third position information to reach the point of encounter (hereinafter referred to as "the third time") by dividing the distance between the position indicated by the third position information and the point of encounter by the travel speed included in the second position information. The derivation unit 46 outputs the first time, the second time, and the third time to the notification unit 48.

The notification unit 48 receives the first time, the second time, and the third time input from the derivation unit 46. The notification unit 48 determines if the relationship between the first time and the second time satisfies the assistance triggering conditions. The assistance triggering conditions may be defined to specify that the first time is equal to or shorter than the second time and the difference between them is within a predetermined amount of time, 3 seconds, for example. That is, if the first time ≤ the second time holds and if (the second time - the first time) ≤ 3 seconds holds, the notification unit 48 determines that the assistance triggering conditions are satisfied.

Even when the relationship between the first time and the second time does not satisfy the assistance triggering conditions, the notification unit 48 also determines if the relationship between the first time and the third time satisfies the assistance triggering conditions. The assistance triggering conditions may be defined to specify that the first time is equal to or shorter than the third time and the difference between them is within a predetermined amount of time, 3 seconds, for example. That is, if the first time ≤ the third time holds and if (the third time - the first time) ≤ 3 seconds holds, the notification unit 48 determines that the assistance triggering conditions are satisfied. Otherwise, the notification unit 48 determines that the assistance triggering conditions are not satisfied.

When the assistance triggering conditions are satisfied, the notification unit 48 issues a caution to the driver as an alert if the first time is equal to or shorter than a first threshold, 5 seconds, for example. If the first time is longer than the first threshold and is equal to or shorter than a second threshold, 8 seconds, for example, the notification unit 48 issues an information provision to the driver as an alert. The second threshold is defined to be longer than the first threshold. If the first time is longer than the second threshold, the notification unit 48 decides not to execute driving assistance. The notification unit 48 also decides not to execute driving assistance when the assistance triggering conditions are not satisfied.

The caution and the information provision are common in that they are both notification to the driver but correspond to different levels of emergency of the notification. The caution represents a higher level of emergency than the information provision. Accordingly, when information provision is notification issued via one of a screen and sound, caution may be provided both via a screen and sound, for example. Additional, contents delivered by the caution may signal higher emergency than the contents delivered by the information provision.

The generation unit 44 receives the first position information and indicator information input from the first acquisition unit 40 and the vehicle length information input from the second acquisition unit 42. The generation unit 44 generates a packet signal that includes these pieces of information. The generation unit 44 outputs the packet signal to the transmission unit 34.

Using Figs. 4A and 4B again, processing performed by the notification unit 48 will be described specifically. Fig. 4A illustrates a situation where the second vehicle 12b as the oncoming car is located relatively far from the point of encounter P. Point A is the position of the front part of the second vehicle 12b, indicated by the second position information described above. Point B is the position of the rear part of the second towed vehicle 16b, indicated by the third position information described above. Assume here that the first time is 2 seconds, the second time is 5 seconds, and the third time is 6 seconds. In the relationship between the first time and the second time, the second time minus the first time equals to 3 seconds, thus satisfying the assistance triggering conditions that the first time ≤ the second time and (the second time - the first time) ≤ 3 seconds. In addition, since the first time is shorter than 5 seconds, the notification unit 48 decides to issue a caution.

Fig. 4B illustrates a situation where the second vehicle 12b as the oncoming car passes the point of encounter P. Assume here that the first time is 0 second, the second time is -0.5 seconds, and the third time is 0.5 seconds. In the relationship between the first time and the second time, the first time is greater than the second time, thus not satisfying the assistance triggering conditions that the first time ≤ the second time and (the second time - the first time) ≤ 3 seconds. However, in the relationship between the first time and the third time, the third time minus the first time equals to 0.5 seconds, thus satisfying the assistance triggering conditions that the first time ≤ the third time and (the third time - the first time) ≤ 3 seconds. In addition, as the first time is shorter than 5 seconds, the notification unit 48 decides to issue a caution.

This configuration can be implemented with a CPU, memories, or other LSls of a desired computer in terms of hardware, or with a program loaded into memory in terms of software, though functional blocks implemented by cooperation of them are illustrated herein. It is therefore understood by those skilled in the art that such functional blocks may be implemented in various forms with hardware alone or combination of hardware and software.

According to this embodiment of the present disclosure, driving assistance taking the vehicle length into consideration can be carried out because whether the assistance triggering conditions are satisfied is determined by use of the third time in addition to the relationship between the first time and the second time. Also, driving assistance taking the vehicle length of another vehicle into consideration can be executed because whether the assistance triggering conditions are satisfied is determined by use of the relationship between the first time and the third time in addition to the relationship between the first time and the second time. Also, an alert for the rear part of a vehicle being towed by another vehicle can be issued since an alert is issued if the relationship between the first time and the third time satisfies the assistance triggering conditions even when the relationship between the first time and the second time does not satisfy the assistance triggering conditions. Additionally, due to use of the second and the third times as values to which the first time is compared, the vehicle length of another vehicle can be taken into consideration.

### (Embodiment 2)

Next, Embodiment 2 will be described. As with Embodiment 1, Embodiment 2 relates to a communication system that performs inter-vehicle communication between terminal devices mounted on vehicles as well as road-to-vehicle communication from a base station device installed such as at an intersection to terminal devices. Again, assistance for right-turn collision avoidance will be considered for description. While Embodiment 1 assumed a case where the vehicle length of the other vehicle is longer, Embodiment 2 assumes a case where the subject vehicle has a longer vehicle length. The communication system 100 and the terminal device 14 in Embodiment 2 are similar to those illustrated in Figs. 1 and 3. The following description will focus on differences from Embodiment 1.

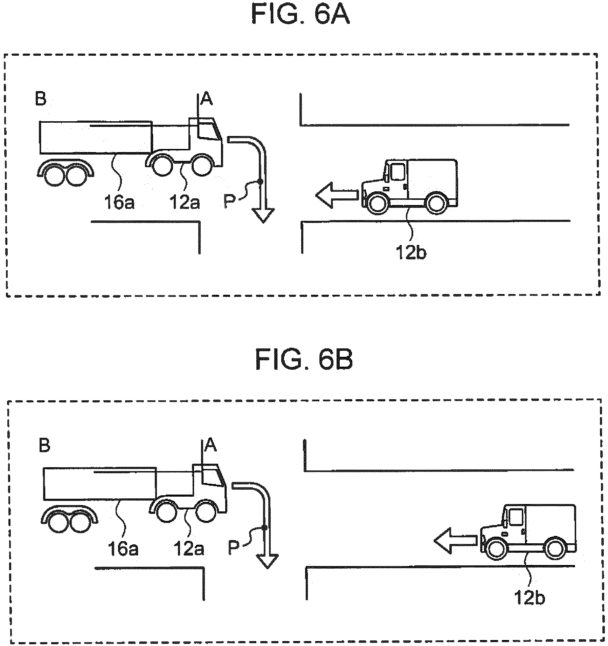

First, the scenario assumed in this embodiment is shown. Figs. 6A and 6B schematically illustrate processing performed by the communication system 100. Fig. 6A shows a situation where the assistance for right-turn collision avoidance described above is performed. The first vehicle 12a and the second vehicle 12b are to pass each other in terms of their positional relationship, but the first vehicle 12a is going to turn right at the intersection while the second vehicle 12b is going to travel straight across the intersection. Thus, the first vehicle 12a and the second vehicle 12b can encounter, can collide with each other, for example, at the point of encounter P. The first vehicle 12a is towing a first towed vehicle 16a; thus the total vehicle length of the first vehicle 12a and the first towed vehicle 16a is longer than the vehicle length of the second vehicle 12b. A first terminal device 14a (not shown) is mounted on the first vehicle 12a and a second terminal device 14b (not shown) is mounted on the second vehicle 12b. As the first terminal device 14a is executing assistance for right-turn collision avoidance, the following will mainly describe the configuration of the processing unit 22 of the first terminal device 14a.

Since the first terminal device 14a is mounted on the first vehicle 12a in Fig. 6A and the first vehicle 12a is towing the first towed vehicle 16a as described above, the second acquisition unit 42 obtains information on the vehicle length of the first towed vehicle 16a as well. The second acquisition unit 42 outputs information on the vehicle length of the vehicle 12 to the generation unit 44 and the derivation unit 46 as with the first acquisition unit 40. The information on the vehicle length of the vehicle 12 acquired by the second acquisition unit 42 thus can be considered to be information added to the first position information.

The derivation unit 46 receives the first position information and indicator information input from the first acquisition unit 40, the vehicle length information input from the second acquisition unit 42, and the second position information input from the reception unit 30. When the indicator information from the first acquisition unit 40 indicates a right turn, the derivation unit 46 determines the point of encounter and then derives the first time and the second time as in Embodiment 1. The derivation unit 46 further derives the third position information by shifting the position indicated by the first position information in accordance with the vehicle length. More specifically, the derivation unit 46 shifts the position indicated by the first position information by the vehicle length in the opposite direction to the point of encounter, thus deriving the third position information. The third position information indicates the position of the rear part of the towed vehicle 16 being towed by the subject vehicle 12. The derivation unit 46 derives the time taken for the position indicated by the third position information to reach the point of encounter (again called "the third time") by dividing the distance between the position indicated by the third position information and the point of encounter by the travel speed included in the first position information. The derivation unit 46 outputs the first time, the second time, and the third time to the notification unit 48.

The notification unit 48 receives the first time, the second time, and the third time input from the derivation unit 46. The notification unit 48 determines if the relationship between the first time and the second time satisfies the assistance triggering conditions. The assistance triggering conditions may be defined to specify that the first time is equal to or shorter than the second time and the difference between them is within a predetermined amount of time, 3 seconds, for example. That is, if the first time ≤ the second time holds and if (the second time - the first time) ≤ 3 seconds holds, the notification unit 48 determines that the assistance triggering conditions are satisfied.

Even when the relationship between the first time and the second time does not satisfy the assistance triggering conditions, the notification unit 48 also determines if the relationship between the second time and the third time satisfies the assistance triggering conditions. The assistance triggering conditions may be defined to specify that the third time is equal to or shorter than the second time and the difference between them is within a predetermined amount of time, 3 seconds, for example. That is, if the third time ≤ the second time holds and if (the second time - the third time) ≤ 3 seconds holds, the notification unit 48 determines that the assistance triggering conditions are satisfied. Otherwise, the notification unit 48 determines that the assistance triggering conditions are not satisfied.

The generation unit 44 receives the first position information and indicator information input from the first acquisition unit 40 and the vehicle length information input from the second acquisition unit 42. The generation unit 44 generates a packet signal that includes these pieces of information. Thus, when the second acquisition unit 42 has obtained information on the vehicle length of the towed vehicle 16, information on the total vehicle length of the vehicle length of the vehicle 12 and that of the towed vehicle 16 will be included in the packet signal. The generation unit 44 outputs the packet signal to the transmission unit 34.

Using Figs. 6A and 6B again, processing performed by the notification unit 48 will be described specifically. Fig. 6A illustrates a situation where the second vehicle 12b as the oncoming car is located relatively close to the point of encounter P. Point A is the position of the front part of the first vehicle 12a, indicated by the first position information described above. Point B is the position of the rear part of the first towed vehicle 16a, indicated by the third position information described above. Assume here that the first time is 1 second, the second time is 3 seconds, and the third time is 4 seconds. In the relationship between the first time and the second time, the second time minus the first time equals to 2 seconds, thus satisfying the assistance triggering conditions that the first time ≤ the second time and (the second time - the first time) ≤ 3 seconds. In addition, since the first time is shorter than 5 seconds, the notification unit 48 decides to issue a caution.

Fig. 6B illustrates a situation where the second vehicle 12b as the oncoming car is located relatively far from the point of encounter P. Assume here that the first time is 1 second, the second time is 5 seconds, and the third time is 4 seconds. In the relationship between the first time and the second time, the second time minus the first time equals to 4 seconds, thus not satisfying the assistance triggering conditions that the first time ≤ the second time and (the second time - the first time) ≤ 3 seconds. However, in the relationship between the second time and the third time, the second time minus the third time equals to 1 second, thus satisfying the assistance triggering conditions that the third timer ≤ the second time and (the second time - the third time) ≤ 3 seconds. In addition, as the third time is shorter than 5 seconds, the notification unit 48 decides to issue a caution.

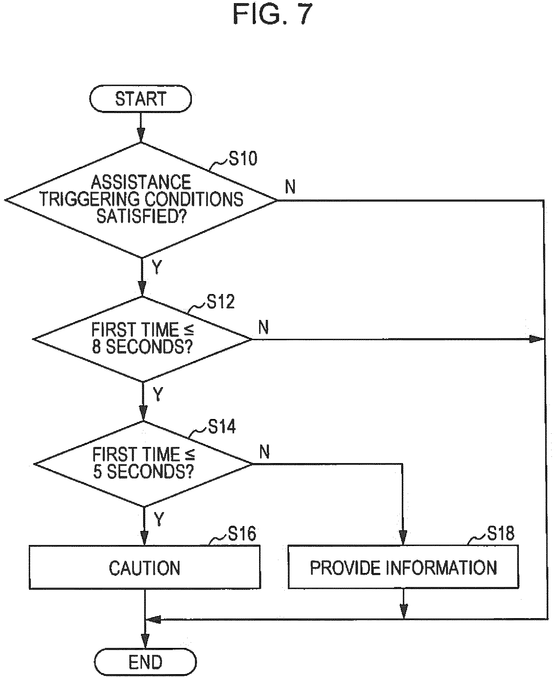

The operation of the communication system 100 thus configured will be described. Fig. 7 is a flowchart illustrating the procedure of notification by the terminal device 14. When the assistance triggering conditions are satisfied (Y in S10), if the first time is equal to or shorter than 8 seconds (Y in S12) and the first time is equal to or shorter than 5 seconds (Y in S14), the notification unit 48 issues a caution (S16). If the first time is not equal to or shorter than 5 seconds (N in S14), the notification unit 48 issues information provision (S18). If the assistance triggering conditions are not satisfied (N in S10) or if the first time is not equal to or shorter than 8 seconds (N in S12), the processing ends.

According to this embodiment of the present disclosure, driving assistance taking the vehicle length of a subject vehicle into consideration can be carried out because whether the assistance triggering conditions are satisfied is determined by use of the relationship between the second time and the third time in addition to the relationship between the first time and the second time. Also, an alert for the rear part of a towed vehicle can be issued since an alert is issued if the relationship between the second time and the third time satisfies the assistance triggering conditions even when the relationship between the first time and the second time does not satisfy the assistance triggering conditions. Additionally, due to use of the first and the third times as values to which the second time is compared, the vehicle length of the subject vehicle can be taken into consideration.

Further, by including information on the total vehicle length of the vehicle length of the vehicle itself and the vehicle length of a vehicle being towed by it into a packet signal, driving assistance can be carried out in consideration of the effect of the vehicle length of the vehicle including the vehicle length of the towed vehicle. Also, transmission of the total vehicle length of the vehicle length of the vehicle itself and the vehicle length of a vehicle being towed by it eliminates the necessity to modify the format of packet signals and also enables combined handling of the vehicle and the vehicle being towed by it.

An overview of one aspect of the present disclosure is as follows. A terminal device according to one aspect of the present disclosure is a terminal device mountable on a vehicle, the terminal device including: an acquisition unit that obtains first position information for one vehicle on which the terminal device is mounted; a reception unit that receives second position information transmitted from another terminal device mounted on another vehicle and corresponding to the other vehicle; a derivation unit that derives a first time taken for the one vehicle to reach a point of encounter based on the first position information obtained by the acquisition unit and derives a second time taken for the other vehicle to reach the point of encounter based on the second position information received by the reception unit; and a notification unit that issues an alert if a relationship between the first time and the second time derived by the derivation unit satisfies assistance triggering conditions. Either one of the first position information obtained by the acquisition unit and the second position information received by the reception unit additionally includes vehicle length information; the derivation unit also derives a third time taken for the position indicated by third position information to reach the point of encounter, where the third position information is determined by shifting the position indicated by either the first or the second position information in accordance with the vehicle length; and the notification unit issues an alert if the relationship between a time derived by the derivation unit based on the other one of the first position information and the second position information and the third time derived by the derivation unit satisfies assistance triggering conditions even when the relationship between the first time and the second time does not satisfy the assistance triggering conditions.

According to this aspect, driving assistance taking the vehicle length into consideration can be carried out because whether the assistance triggering conditions are satisfied is determined by use of the third time in addition to the relationship between the first time and the second time.

The first position information obtained by the acquisition unit may additionally include information on the vehicle length of the one vehicle; the derivation unit may derive a third time taken for the position indicated by third position information to reach the point of encounter, where the third position information is determined by shifting the position indicated by the first position information in accordance with the vehicle length of the one vehicle; and the notification unit may issue an alert if the relationship between the second time and the third time satisfies assistance triggering conditions even when the relationship between the first time and the second time does not satisfy the assistance triggering conditions. In this case, driving assistance taking the vehicle length of the subject vehicle into consideration can be carried out because whether the assistance triggering conditions are satisfied is determined by use of the relationship between the second time and the third time in addition to the relationship between the first time and the second time.

Satisfying the assistance triggering conditions as determined by the notification unit may be satisfying at least one of (1) that the first time is equal to or shorter than the second time and the difference between them is within a predetermined amount of time, and (2) that the third time is equal to or shorter than the second time and the difference between them is within a predetermined amount of time. In this case, due to use of the first and the third times as values to which the second time is compared, the vehicle length of the subject vehicle can be taken into consideration.

The second position information received by the reception unit may additionally include information on a vehicle length of the other vehicle; the derivation unit may derive a third time taken for the position indicated by third position information to reach the point of encounter, where the third position information is determined by shifting the position indicated by the second position information in accordance with the vehicle length of the other vehicle; and the notification unit may issue an alert if the relationship between the first time and the third time satisfies assistance triggering conditions even when the relationship between the first time and the second time does not satisfy the assistance triggering conditions. In this case, driving assistance taking the vehicle length of another vehicle into consideration can be carried out because whether the assistance triggering conditions are satisfied is determined by use of the relationship between the first time and the third time in addition to the relationship between the first time and the second time.

Satisfying the assistance triggering conditions as determined by the notification unit may be satisfying at least one of (1) that the first time is equal to or shorter than the second time and the difference between them is within a predetermined amount of time, and (2) that the first time is equal to or shorter than the third time and the difference between them is within a predetermined amount of time. In this case, due to use of the second and the third times as values to which the first time is compared, the vehicle length of the other vehicle can be taken into consideration.

Another aspect of the present disclosure is also a terminal device. The device is a terminal device mountable on a vehicle, the terminal device including: a first acquisition unit that obtains position information for a vehicle on which the terminal device is mounted; a second acquisition unit that obtains information on a vehicle length of the vehicle; a generation unit that generates a packet signal that includes the position information obtained by the first acquisition unit and the vehicle length information obtained by the second acquisition unit; and a transmission unit that transmits the packet signal generated by the generation unit. The second acquisition unit obtains information on the vehicle length of a vehicle being towed by the vehicle, and the generation unit includes information on a total vehicle length of the vehicle length of the vehicle and the vehicle length of the towed vehicle into a packet signal if the second acquisition unit has obtained the information on the vehicle length of the towed vehicle.

According to this aspect, by including information on the total vehicle length of the vehicle length of the vehicle itself and the vehicle length of a vehicle being towed by it into a packet signal, driving assistance can be carried out in consideration of the effect of the vehicle length of the vehicle including the vehicle length of the towed vehicle.

The present disclosure has been described with respect to the embodiments thereof. It will be appreciated by those skilled in the art that the embodiments are illustrative and different variations are possible for combination of the components or process steps and these variations fall within the scope of the present disclosure.

Combinations of Embodiments 1 and 2 are also advantageous. Such variations would produce combined effects of Embodiments 1 and 2.

In Embodiments 1 and 2, the derivation unit 46 and the notification unit 48 implement processing in consideration of the vehicle length. However, the derivation unit 46 and the notification unit 48 may alternatively implement processing in consideration of other vehicle information such as vehicle width or weight, for example. Such a variation may realize operation with high accuracy of safety.

In Embodiments 1 and 2, the derivation unit 46 and the notification unit 48 implement processing considering the vehicle length in every case. However, the derivation unit 46 and the notification unit 48 may alternatively implement processing in consideration of the vehicle length when the vehicle length is equal to or greater than a predetermined length and without consideration of the vehicle length when the vehicle length is less than the predetermined length, for example. Such a variation can decrease processing load.

The assistance for right-turn collision avoidance in Embodiments 1 and 2 are supposed to be applied in left-hand traffic driving system as accustomed in Japan. It is noted that Embodiments 1 and 2 may be applied mutatis mutandis to an assistance for left-turn collision avoidance in right-hand traffic driving system as accustomed in US. In this case, the terms "right" and "left" will be replaced with each other.

## Claims

1. A terminal device mounted on a first vehicle, the terminal device comprising:
one or more memories; and
circuitry which, in operation, performs operations including:
obtaining first position information indicating a position of the first vehicle;
receiving second position information indicating a position of a second vehicle which is different from the first vehicle;
deriving a first time period required for the first vehicle to reach a point of encounter at least from the first position information, the point of encounter being a point at which the first vehicle and the second vehicle are expected to encounter each other;
deriving a second time period required for the second vehicle to reach the point of encounter at least from the second position information;
issuing an alert if a relationship between the first time period and the second time period satisfies assistance triggering conditions;
when the first position information additionally includes information on a vehicle length of the first vehicle, calculating a third time period required for a rear position on the first vehicle to reach the point of encounter, the rear position on the first vehicle being a position shifted backward from a position indicated by the first position information in accordance with the vehicle length of the first vehicle;
when the second position information additionally includes information on a vehicle length of the second vehicle, calculating a fourth time period required for a rear position on the second vehicle to reach the point of encounter, the rear position on the second vehicle being a position shifted backward from a position indicated by the second position information in accordance with the vehicle length of the second vehicle; and
when the relationship between the first time period and the second time period does not satisfy the assistance triggering conditions, issuing an alert if a relationship between the second time period and the third time period satisfies the assistance triggering conditions or if a relationship between the first time period and the fourth time period satisfies the assistance triggering conditions.

2. The terminal device according to Claim 1, wherein satisfying the assistance triggering conditions comprises satisfying at least one of (1) that the first time period is equal to or shorter than the second time period and a difference between the first time period and the second time period is within a predetermined amount of time, and (2) that the third time period is equal to or shorter than the second time period and a difference between the third time period and the second time period is within a predetermined amount of time.

3. The terminal device according to Claim 1, wherein satisfying the assistance triggering conditions comprises satisfying at least one of (1) that the first time period is equal to or shorter than the second time period and a difference between the first time period and the second time period is within a predetermined amount of time, and (2) that the first time period is equal to or shorter than the fourth time period and a difference between the first time period and the fourth time period is within a predetermined amount of time.

4. The terminal device according to Claim 1, wherein
if the first vehicle is towing a first towed vehicle, the third time period is calculated, and
if the second vehicle is towing a second towed vehicle, the fourth time period is calculated.

5. A method for a terminal device mounted on a first vehicle, the method comprising:
obtaining first position information indicating a position of a first vehicle;
receiving second position information indicating a position of a second vehicle which is different from the first vehicle;
deriving a first time period required for the first vehicle to reach a point of encounter at least from the first position information, the point of encounter being a point at which the first vehicle and the second vehicle are expected to encounter each other;
deriving a second time period required for the second vehicle to reach the point of encounter at least from the second position information;
issuing an alert if a relationship between the first time period and the second time period satisfies assistance triggering conditions;
when the first position information additionally includes information on a vehicle length of the first vehicle, calculating a third time period required for a rear position on the first vehicle to reach the point of encounter, the rear position on the first vehicle being a position shifted backward from a position indicated by the first position information in accordance with the vehicle length of the first vehicle;
when the second position information additionally includes information on a vehicle length of the second vehicle, calculating a fourth time period required for a rear position on the second vehicle to reach the point of encounter, the rear position on the second vehicle being a position shifted backward from a position indicated by the second position information in accordance with the vehicle length of the second vehicle; and
when the relationship between the first time period and the second time period does not satisfy the assistance triggering conditions, issuing an alert if a relationship between the second time period and the third time period satisfies the assistance triggering conditions or if a relationship between the first time period and the fourth time period satisfies the assistance triggering conditions.

6. The method according to Claim 5, wherein
if the first vehicle is towing a first towed vehicle, the third time period is calculated, and
if the second vehicle is towing a second towed vehicle, the fourth time period is calculated.

7. A terminal device mounted on a first vehicle, the terminal device comprising:
one or more memories, and
circuitry which, in operation, performs operations including:
obtaining position information indicating a position of a vehicle;
obtaining information on a first vehicle length of the vehicle;
obtaining information on a second vehicle length of a towed vehicle being towed by the vehicle;
when information on the vehicle length of the towed vehicle has been obtained, generating a packet signal that includes the position information and information on a third vehicle length, the third vehicle length being determined by adding the first vehicle length and the second vehicle length; and
transmitting the packet signal to outside the terminal device.
